# EUROPÄISCHE PATENTSCHRIFT

(11) **EP 2 267 317 B1**
(45) Veröffentlichungstag und Bekanntmachung des Hinweises auf die Patenterteilung: **10.04.2019**
(21) Anmeldenummer: 10006093.8
(22) Anmeldetag: 11.06.2010
(51) Int. Cl.: F15B 21/00

(54) **Hydrauliksystem**
Hydraulic system
Système hydraulique

(30) Priorität: 22.06.2009 DE 102009029840
(43) Veröffentlichungstag der Anmeldung: 29.12.2010
(73) Patentinhaber: Liebherr-Werk Nenzing GmbH, 6710 Nenzing (AT)
(72) Erfinder: Schneider, Klaus, Dr.-Ing., 88145 Hergatz (DE); Kräutler, Wilhelm, Ing., 6842 Koblach (AT)
(74) Vertreter: Laufhütte, Dieter

(56) Entgegenhaltungen:
- DE-A1- 3 017 819
- DE-T5-112004 002 502

## Beschreibung

Die vorliegende Erfindung betrifft ein Hydrauliksystem mit einer Einspeisepumpe zum Einspeisen von Hydraulikfluid.

Einspeispumpen werden üblicherweise dazu eingesetzt, um die Saugseite einer weiteren Hydraulikpumpe mit Hydraulikfluid zu versorgen. Hierdurch können Kavitationen im Hydraulikkreislauf bei schnellen Druckänderungen vermieden werden. Einspeisepumpen werden dabei üblicherweise mit einem relativ geringen Förderdruck betrieben.

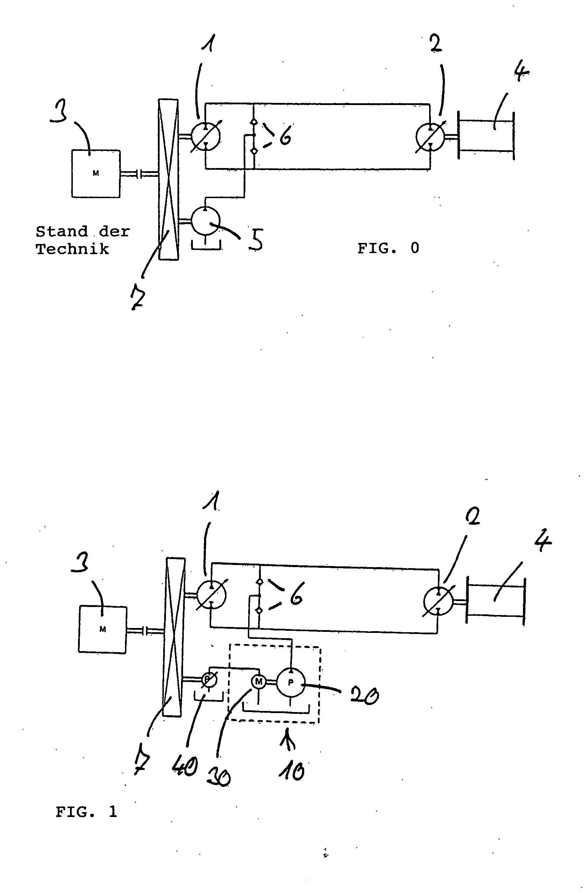

Ein typisches Hydrauliksystem mit einer Einspeispumpe gemäß dem Stand der Technik ist in Figur 0 gezeigt. Das Hydrauliksystem umfasst einen geschlossenen Hydraulikreislauf aus einer Verstellpumpe 1 und einem Verstellmotor 2, wobei die Verstellpumpe 1 von einem Verbrennungsmotor angetrieben wird und der Verstellmotor 2 eine Winde 4 antreibt. Die Einspeisepumpe 5 steht über Rückschlagventile 6 mit beiden Seiten des geschlossenen Hydraulikkreislaufs in Verbindung, um Kavitationen in Folge von Druckeinbrüchen aufgrund dynamischer Vorgänge wie z. B. dem Schwenken der Pumpe zu. vermeiden und um bei externen Leckagen im Hydraulikkreislauf Hydraulikfluid nachzufördern. Die Einspeisepumpe 5 wird dabei über ein Getriebe 7 ebenfalls vom Verbrennungsmotor 3 angetrieben.

Einspeisepumpen werden ebenfalls eingesetzt, um bei halb offenen Kreisen die Differenzmenge zwischen dem Volumen auf Kolben- und Ringfläche des Hydraulikzylinders nachzufördern und bei Speicheranwendungen die Speicherpumpen mit Hydraulikfluid mit einem gewissen Mindestdruck zu versorgen.

Bekannte Hydrauliksysteme mit Einspeisepumpe weisen dabei oft einen relativ schlechten Wirkungsgrad der Einspeisepumpe 5 aufgrund der hohen mechanischen Schleppleistung der Einspeisepumpe 5 auf. Zudem sind bei großer Einspeisemenge viele Pumpen bzw. Pumpen mit großem Schluckvolumen erforderlich, wofür ein entsprechend großer Bauraum am Verteilergetriebe des Verbrennungsmotors erforderlich ist. Eventuell sind auch ein zusätzliches Verteilergetriebe bzw. entsprechende Antriebe für die Pumpen notwendig. Aus der DE 11 2004 002 502 T5 ist ein System für unter inneren Überdruck gesetztes Hydraulikfluid mit entfernter Ladepumpe bekannt, wobei die Ladepumpe durch einen Hydraulikmotor des Systems angetrieben wird.

Ein alternatives Hydrauliksystem ist aus der DE 30 17 819 bekannt, das eine über einen hydraulischen Motor angetriebene Ladepumpe zeigt. Die Druckversorgung des Motors wird durch eine Abzweigung aus einem hydraulischen Hilfskreis für eine Bohrgestängetransportvorrichtung bereitgestellt.

Aufgabe der vorliegenden Erfindung ist es, ein gegenüber dem Stand der Technik verbessertes Hydrauliksystem mit Einspeisepumpe zur Verfügung zu stellen.

Diese Aufgabe wird erfindungsgemäß durch ein Hydrauliksystem gemäß Anspruch 1 gelöst. Das Hydrauliksystem umfasst dabei eine Einspeisepumpe zum Einspeisen von Hydraulikfluid, wobei erfindungsgemäß die Einspeisepumpe von einem hydraulischen Antriebsmotor angetrieben wird. Anders als im Stand der Technik wird die Einspeisepumpe daher nicht direkt über einen Verbrennungsmotor angetrieben, sondern über einen hydraulischen Antriebsmotor.

Durch die Verwendung eines hydraulischen Antriebsmotors zum Antrieb der Einspeisepumpe ergibt sich eine erhöhte Flexibilität bei der Ausgestaltung des Hydrauliksystems. Insbesondere kann es möglich sein, den Wirkungsgrad durch eine Verringerung der Schleppleistung zu verbessern. Zudem wird eine flexiblere Anordnung des Hydrauliksystems möglich, durch welche Z. B. der erforderliche Bauraum am Verteilergetriebe oder die Anzahl der Antriebe am Verteilergetriebe verringert werden kann.

Die erfindungsgemäße Einspeisepumpe kann dabei für in all jenen Anwendungen zum Einsatz kommen, in welchen auch Einspeisepumpen gemäß dem Stand der Technik eingesetzt werden. Die erfindungsgemäße Einspeispumpe versorgt dabei üblicherweise die Saugseite einer weiteren Hydraulikpumpe mit Hydraulikfluid. Insbesondere kann die Einspeisepumpe dabei zur Nachförderung von Hydraulikfluid in einem geschlossenen und in einem halboffenen Hydraulikkreislauf eingesetzt werden, zum Einspeisen von Hydraulikfluid am Sauganschluß einer Hydraulikpumpe eines offenen Kreislaufs, sowie allgemein zur Förderung von großen Ölmengen bei geringem Druck, z. B. zum Einspeisen von Hydraulikfluid am Sauganschluß einer Speicherpumpe zum Aufladen eines Hydraulikspeichers.

Erfindungsgemäß ist das System aus hydraulischem Antriebsmotor und Einspeisepumpe dabei so ausgeführt, dass der hydraulische Antriebsmotor mit einem größeren Druck und einer entsprechend kleineren Förderrate betreibbar ist als die Einspeisepumpe. Insbesondere weist der hydraulische Antriebsmotor hierfür vorteilhafterweise ein kleineres maximales Schluckvolumen auf als die Einspeisepumpe. Erfindungsgemäß kann der hydraulische Antriebsmotor also mit hohem Druck und niedriger Förderrate betrieben werden, während die Einspeisepumpe einen geringeren Druck und eine entsprechend höhere Förderrate liefert. Dies ist von Vorteil, weil Einspeisepumpen nur einen relativ geringen Förderdruck zur Verfügung stellen müssen, während teilweise erhebliche Förderraten benötigt werden. Die erfindungsgemäße Anordnung ermöglicht es nun, einen Antriebsmotor mit relativ kleinem Schluckvolumen und damit relativ niedriger Schleppleistung einzusetzen, und dennoch hohe Förderraten zu erreichen.

Vorteilhafterweise ist das Druckverhältnis zwischen dem Eingang des hydraulischen Antriebsmotors und dem Ausgang der Einspeisepumpe dabei größer als 3:1, weiterhin vorteilhafterweise größer als 5:1, weiterhin vorteilhafterweise größer als 10:1 und weiterhin vorteilhafterweise größer als 30:1. Diese Druckverhältnisse erlauben unterschiedliche Anwendungen der Einspeisepumpe. Soll die Einspeisepumpe z. B. zur Versorgung geschlossener oder halboffener Hydraulikkreisläufe herangezogen werden, wird ein relativ hoher Einspeisedruck (beispielsweise zwischen 30 und 50 bar) benötigt. Wird der hydraulische Antriebsmotor mit einem Druck von 150 bar betrieben, so ermöglicht das Druckverhältnis von 3:1 einen Betrieb der Einspeisepumpe bei 50 bar. Bei entsprechend höheren Betriebsdrücken des hydraulischen Antriebsmotors z. B. von 250 bar ergibt sich dann ein Druckverhältnis von ca. 5:1. Wird die Einspeisepumpe dagegen in Anwendungen eingesetzt, bei welchen ein niedriger Einspeisedruck von z. B. 5 bar benötigt wird, sind entsprechend höhere Druckverhältnisse möglich. Ein solcher Druck wird beispielsweise benötigt, wenn die Einspeisepumpe die Pumpe eines offenen Hydraulikkreislaufs mit Hydraulikfluid versorgt.

Die Reduktion des Betriebsdrucks und die damit verbundene Erhöhung der Förderrate ermöglicht dabei den Einsatz kleinerer Antriebsmotoren mit niedrigerer Förderate und somit eine Reduktion der Schleppleistung in Betriebsphasen, in denen die Einspeisepumpe nur wenig Hydraulikfluid zur Verfügung stellen muss. Der Wirkungsgrad ist zwar nicht allen Betriebspunkten besser als bei einem direkten Antrieb über einen Verbrennungsmotor, die Betriebspunkte mit einem besseren Wirkungsgrad treten aber üblicherweise häufiger auf.

Vorteilhafterweise weist der hydraulische Antriebsmotor daher ein kleineres maximales Schluckvolumen auf als die Einspeisepumpe, wobei vorteilhafterweise die maximalen Schluckvolumina ein Verhältnis von weniger als 1:3, weiterhin vorteilhafterweise von weniger als 1:5, weiterhin vorteilhafterweise von weniger als 1:10 und weiterhin vorteilhafterweise von weniger als 1:30 aufweisen. Dies ermöglicht die Übersetzungen, welche bereist oben beschrieben wurden.

Weiterhin vorteilhafterweise sind dabei die Abtriebs- und Antriebsachsen des hydraulischen Antriebsmotors und der Einspeisepumpe ohne Zwischenschaltung eines mechanischen Getriebes miteinander verbunden. Das Druckverhältnis wird damit allein durch die entsprechenden Verhältnisse der Schluckvolumina bestimmt.

Vorteilhafterweise ist die Einspeisepumpe als Konstantpumpe ausgeführt. Hierdurch können Kosten und Bauraum gespart werden. Alternativ oder zusätzlich kann auch der hydraulische Antriebsmotor als Konstantmotor ausgeführt sein. Hierdurch können ebenfalls Kosten und Bauraum gespart werden.

Weiterhin vorteilhafterweise sind dabei sowohl der hydraulische Antriebsmotor als Konstantmotor als auch die Einspeisepumpe als Konstantpumpe ausgeführt. Der hydraulische Antriebsmotor und die Einspeisepumpe weisen dabei vorteilhafterweise die entsprechenden Verhältnisse ihrer Schluckvolumina auf, wie sie oben angegeben wurden. Diese Anordnung ist besonders kostengünstig zu realisieren.

Alternativ kann jedoch auch vorgesehen sein, dass der hydraulische Antriebsmotor als Verstellmotor und die Einspeisepumpe als Konstantpumpe ausgeführt ist. Dies ist zwar teurer, hat im Betrieb jedoch gewisse energetische Vorteile, da das Schluckvolumen des hydraulischen Antriebsmotors an die Betriebssituation angepaßt werden kann. Das maximale Schluckvolumen des hydraulischen Antriebsmotors und das konstante Schluckvolumen der Einspeisepumpe weisen dabei vorteilhafterweise die Verhältnisse auf, wie sie oben angegeben wurden. Alternativ können die oben angegebenen Verhältnisse auch durch eine entsprechende Verstellung des hydraulischen Antriebsmotors im Betrieb erreicht werden.

Das erfindungsgemäße Hydrauliksystem umfasst eine zweite Hydraulikpumpe, über welche der hydraulische Antriebsmotor antreibbar ist. Dabei sind unterschiedliche Antriebsvarianten zum Antrieb des hydraulischen Antriebsmotors möglich, wobei die zweite Hydraulikpumpe jeweils mit einem relativ hohen Druck betrieben werden kann und nur eine relativ geringe Fördermenge zur Verfügung stellen muss.

In einer ersten nicht erfindungsgemäßen Variante kann es sich bei der zweiten Hydraulikpumpe um die Hydraulikpumpe handeln, welche von der Einspeisepumpe mit Hydraulikfluid versorgt wird. Hierdurch kann auf einen separaten Antrieb für den hydraulischen Antriebsmotor verzichtet werden. Dabei ist vorteilhafterweise der Einlass des hydraulischen Antriebsmotors mit dem Auslass der zweiten Hydraulikpumpe verbunden oder verbindbar ist, während der Einlass der zweiten Hydraulikpumpe mit dem Auslass der Einspeisepumpe verbunden oder verbindbar ist. Dies kann insbesondere bei Speicheranwendungen, bei welchen große Fördermengen benötigt werden, von Vorteil sein.

Erfindungsgemäß ist eine separate zweite Hydraulikpumpe zum Antrieb des hydraulischen Antriebsmotors vorgesehen. Die zweite Hydraulikpumpe und der hydraulische Antriebsmotor bilden damit ein hydraulisches Getriebe. Insbesondere kann die separate zweite Hydraulikpumpe allein zum Antrieb des hydraulischen Antriebsmotors dienen. Erfindungsgemäß kann dabei eine zweite Hydraulikpumpe mit einem geringeren Schluckvolumen eingesetzt werden, wodurch sich die Schleppleistung der zweiten Hydraulikpumpe reduziert. Vorteilhafterweise weist die zweite Hydraulikpumpe dabei ein kleineres maximales Schluckvolumen auf als die Einspeisepumpe. Weiterhin vorteilhafterweise haben die maximalen Schluckvolumina der zweiten Hydraulikpumpe und der Einspeisepumpe dabei ein Verhältnis von weniger als 1:3, weiterhin vorteilhafterweise von weniger als 1:5, weiterhin vorteilhafterweise von weniger als 1:10 und weiterhin vorteilhafterweise weniger als 1:30.

Durch das geringere Schluckvolumen der zweiten Hydraulikpumpe ist deren Schleppleistung in Phasen, in welchen die Einspeisepumpe wenig oder überhaupt kein Hydraulikfluid fördern muss, entsprechend geringer als bei einer größeren Hydraulikpumpe, welche direkt zum Einspeisen von Hydraulikfluid ins Hydrauliksystem eingesetzt würde. Damit ergibt sich zwar nicht in allen Betriebspunkten ein besserer Wirkungsgrad. Zeitlich überwiegen jedoch die Betriebspunkte mit einem besseren Wirkungsgrad, so dass der durchschnittliche Gesamtwirkungsgrad verbessert werden kann.

Erfindungsgemäß kann die zweite Hydraulikpumpe von einem Verbrennungsmotor oder Elektromotor angetrieben werden. Der Verbrennungsmotor oder Elektromotor dient dabei vorteilhafterweise dem Antrieb einer oder mehrerer weiterer Hydraulikpumpen. Insbesondere kann dabei ein Verteilergetriebe vorgesehen sein, über welches der Verbrennungsmotor oder Elektromotor die zweite Hydraulikpumpe sowie eine oder mehrere weitere Hydraulikpumpen antreibt. Durch das kleinere Schluckvolumen der zweiten Hydraulikpumpe ist der am Verteilergetriebe benötigte Bauraum entsprechend kleiner.

Erfindungsgemäß ist die zweite Hydraulikpumpe als Verstellpumpe ausgeführt. Weiterhin erfindungsgemäß ist die zweite Hydraulikpumpe dabei druckgeregelt. Dies ist insbesondere bei einer separaten zweiten Hydraulikpumpe von Vorteil. Durch die Druckregelung wird mit dem Betriebsdruck für den hydraulischen Antriebsmotor der entsprechend geringere Förderdruck der Einspeisepumpe eingestellt. Insbesondere kann es sich dabei um eine Druckregelung handeln, welche den Betriebsdruck des hydraulischen Antriebsmotors auf einem vorgegebenen konstanten Wert hält. Denkbar ist jedoch auch ein einstellbarer Betriebsdruck für den hydraulischen Antriebsmotor.

In einer weiteren Ausführungsform umfasst das erfindungsgemäße Hydrauliksystem einen Hochdruckspeicher, welcher mit dem hydraulischen Antriebsmotor verbunden oder verbindbar ist. Damit stellt der Hochdruckspeicher Hydraulikfluid mit einem entsprechend hohen Betriebsdruck für den hydraulischen Antriebsmotor zur Verfügung. Der hydraulische Antriebsmotor kann dabei über den Hochdruckspeicher antreibbar sein. Weiterhin kann vorgesehen sein, dass der hydraulische Antriebsmotor sowohl mit dem Hochdruckspeicher als auch mit einer zweiten Hydraulikpumpe verbunden oder verbindbar ist. Insbesondere kann in dem druckgeregelten System aus zweiter Hydraulikpumpe und hydraulischem Antriebsmotor ein Hochdruckspeicher vorgesehen sein.

Die erfindungsgemäße Einspeisepumpe kann dabei für all die Anwendungen zum Einsatz kommen, für welche auch Einspeisepumpen gemäß dem Stand der Technik eingesetzt werden.

Insbesondere kann die Einspeisepumpe dabei Hydraulikfluid in einen oder mehrere Hydraulikkreisläufe aus Hydraulikpumpe und Hydraulikmotor einspeisen. Bei einem geschlossenen Kreis sorgt die hydraulische Einspeisung über die Einspeisepumpe dabei dafür, dass Kavitation in Folge von Druckeinbrücken aufgrund dynamischer Vorgänge, wie z. B. dem Schwenken der Pumpe verhindert werden können und Öl, welches aufgrund von Leckagen des Hydrauliksystems verloren geht, nachgefördert wird. In einem halboffenen Kreislauf aus Pumpe und Hydraulikzylinder sorgt die Einspeisepumpe zudem für die Nachförderung der Differenzmenge zwischen dem Volumen auf Kolben- und Ringfläche. Vorteilhafterweise ist die Einspeisepumpe dabei mit beiden Seiten des geschlossenen oder halboffenen Hydraulikkreislaufs über Rückschlagventile verbunden. Weiterhin kann die Einspeisepumpe bei einem offenen Hydraulikkreislauf aus Pumpe und Motor eingesetzt werden, um am Sauganschluß der Pumpe Öl mit einem ggf. drehzahlabhängigen Mindestdruck einzuspeisen, beispielsweise mit mindestens 5 bar.

Weiterhin kann auch ein Hydrauliksystem mit einer dritten hydraulischen Verdrängermaschine, über welche ein Hochdruckspeicher aufladbar ist, vorgesehen sein, wobei die Einspeispumpe die dritte hydraulische Verdrängermaschine mit Hydraulikfluid versorgt. Hierdurch kann das Fördervolumen der dritten hydraulischen Verdrängermaschine erhöht werden, da diese zusammen mit der Einspeisepumpe als selbstsaugende Pumpe arbeitet.

Vorteilhafterweise ist die dritte hydraulische Verdrängermaschine dabei mit einer hydraulisch angetriebenen Vorrichtung mechanisch verbunden oder verbindbar, deren Energie durch das Aufladen des Hydraulikspeichers rückgewonnen werden kann. Z.B. kann es sich bei der Vorrichtung um die Hubwinde eines Kranes handeln, so dass die beim Absenken der Last frei werdende potentielle Energie über die dritte hydraulische Verdrängermaschine in hydraulische Energie umgewandelt und im Hydraulikspeicher gespeichert werden kann. Ebenso kann es sich bei der Vorrichtung um eine Einziehwinde, ein Drehwerk oder einen Fahrantrieb einer Arbeitsmaschine, insbesondere eines Kranes handeln. Die Verwendung der hydraulischen Einspeisepumpe zum Ansaugen des Hydraulikfluids erhöht das Fördervolumen der dritten hydraulischen Verdrängermaschine. Insbesondere kann diese mit höheren Drehzahlen betrieben werden. Ohne Einspeisung würde dagegen Kavitation an den Gleitflächen entstehen. In Folge könnten größere Teile ausgewaschen werden und zur Verstopfung der Schmierbohrungen in den Kolben führen. Dies wiederum führt zu Schmiermangel an der Gleitfläche, so dass es ohne Einspeisepumpe zu einem Ausfall der kompletten hydraulischen Verdrängermaschine kommen könnte. Der Antrieb der Einspeisepumpe gemäß der vorliegenden Erfindung über einen hydraulischen Antriebsmotor ermöglicht es dabei, die Schleppleistung beim Antrieb der Einspeisepumpe zu verringern, insbesondere in solchen Betriebsphasen, in welchen die dritte hydraulische Verdrängermaschine wenig oder überhaupt nicht betätigt wird.

Die dritte hydraulische Verdrängermaschine kann dabei zudem eingesetzt werden, um die Vorrichtung mit Hilfe des im Hochdruckspeicher gespeicherten Hydraulikfluids anzutreiben, so dass die gespeicherte Energie in Phasen hoher Belastung zum Antrieb der Vorrichtung bzw. zur Unterstützung eines Primärantriebs eingesetzt werden kann.

Der Antrieb des hydraulischen Antriebsmotors der Einspeisepumpe kann dabei über eine separate Hydraulikpumpe erfolgen, welche von einem Verbrennungsmotor oder einem Elektromotor angetrieben wird.

In einer weiteren Variante der vorliegenden Erfindung ist der Einlass des hydraulischen Antriebsmotors der Einspeisepumpe dagegen mit dem Auslass der dritten Verdrängermaschine verbunden oder verbindbar, und der Einlass der dritten Verdrängermaschine mit dem Auslass der Einspeisepumpe verbunden oder verbindbar. Insbesondere können die entsprechenden Komponenten ständig miteinander in Verbindung stehen, insbesondere ohne dass in den Verbindungsleitungen Ventile vorgesehen werden. Das von der dritten Verdrängermaschine unter hohem Druck geförderte Hydraulikfluid kann damit eingesetzt werden, um den hydraulischen Antriebsmotor und damit die Einspeispumpe anzutreiben, welche wiederum der dritten hydraulischen Verdrängermaschine Hydraulikfluid mit einem geringeren Druck zur Verfügung stellt. Die dritte hydraulische Verdrängermaschine kann damit die zweite Hydraulikpumpe bilden, welche den hydraulischen Antriebsmotor antreibt. Vorteilhafterweise steht der Einlass des hydraulischen Antriebsmotors weiterhin mit einem Hochdruckspeicher in Verbindung. Wirken keine externen Kräfte auf die dritte hydraulische Verdrängermaschine, stehen die einzelnen Drücke miteinander im Gleichgewicht, wobei der Eingangsdruck am Antriebsmotor und der Ausgangsdruck an der Einspeisepumpe durch das Verhältnis der Schluckvolumina des hydraulischen Antriebsmotors und der Einspeisepumpe bestimmt werden. Diese Anordnung hat den Vorteil, dass keinerlei Schleppleistung auftritt, wenn die dritte hydraulische Verdrängermaschine in Ruhestellung steht, das heißt wenn die Vorrichtung nicht bewegt wird. Damit treten in diesen Phasen auch keine Energieverluste auf, so dass der Gesamtwirkungsgrad entsprechend besser ausfällt.

Vorteilhafterweise ist der Hochdruckspeicher über ein Ventil mit einer weiteren hydraulischen Verdrängermaschine verbindbar, wobei der Hochdruckspeicher von der weiteren hydraulischen Verdrängermaschine aufladbar ist. Diese Anordnung berücksichtigt, dass der Hochdruckspeicher nicht allein über die dritte hydraulische Verdrängermaschine aufladbar ist, da zum Betrieb der Einspeisepumpe bereits ein gewisser Druck im Hochdruckspeicher benötigt wird. Daher kann zum anfänglichen Aufladen des Hochdruckspeichers die weitere hydraulische Verdrängermaschine eingesetzt werden.

Das erfindungemäße Hydrauliksystem umfasst weiterhin vorteilhafterweise einen Hydraulikkreislauf aus einer Hydraulikpumpe und einem Hydraulikmotor, wobei der Hydraulikmotor eine Vorrichtung antreibt, und wobei die dritte hydraulische Verdrängermaschine mit der Vorrichtung mechanisch verbunden oder verbindbar ist. Damit bildet der Hydraulikkreislauf aus Hydraulikpumpe und Hydraulikmotor den Primärantrieb der Vorrichtung, so dass die dritte hydraulische Verdrängermaschine zum Aufladen des Hochdruckspeichers bzw. zur Antriebsunterstützung des ersten Hydraulikkreislaufs eingesetzt werden kann. Vorteilhafterweise wird die Hydraulikpumpe des Hydraulikkreislaufs dabei von einem Verbrennungsmotor oder einem Elektromotor angetrieben.

Weiterhin vorteilhafterweise ist bei dem erfindungsgemäßen Hydrauliksystem mindestens ein Verbrennungsmotor vorgesehen, welcher die Pumpe eines ersten Hydraulikkreislaufs aus Pumpe und Motor antreibt. Dabei ist ein erfindungsgemäßes System aus hydraulischen Antriebsmotor und Einspeisepumpe vorgesehen, um dem ersten Hydraulikkreislauf Hydraulikfluid zur Verfügung zu stellen. Dabei kann der Verbrennungsmotor oder Elektromotor eine zweite Hydraulikpumpe, welche den hydraulischen Antriebsmotor der Einspeisepumpe antreibt, antreiben. Eine solche Anordnung kann weiterhin ein zweites erfindungsgemäßes System aus hydraulischem Antriebsmotor und Einspeisepumpe aufweisen. Insbesondere dient dieses weitere System vorteilhafterweise der Hydraulikfluidversorgung einer dritten hydraulischen Verdrängermaschine, über welche ein Hochdruckspeicher aufladbar ist.

Die vorliegende Erfindung umfasst weiterhin ein Verfahren zum Einspeisen von Hydraulikfluid in ein Hydrauliksystem über eine Einspeisepumpe. Erfindungsgemäß ist dabei vorgesehen, dass die Einspeisepumpe von einem hydraulischen Antriebsmotor angetrieben wird. Offensichtlich ergeben sich durch das erfindungsgemäße Verfahren die gleichen Vorteile, wie sie bereits oben bezüglich des Hydrauliksystems dargelegt wurden. Dabei wird die Einspeisepumpe erfindungsgemäß z. B. dazu eingesetzt, um Hydraulikfluid in einen geschlossenen oder einen halboffenen Hydraulikkreislauf einzuspeisen, oder um Hydraulikfluid an der Saugseite einer Hydraulikpumpe zur Verfügung zu stellen. Insbesondere kann es sich dabei um die Pumpe eines offenen Hydraulikkreislaufs aus Pumpe und Motor handeln, oder um eine Speicherpumpe für einen Hydraulikspeicher.

Vorteilhafterweise wird dabei der hydraulische Antriebsmotor mit einem größeren Druck und einer entsprechend kleineren Förderrate betrieben als die Einspeisepumpe. Wie bereits oben dargestellt, kann damit erfindungsgemäß ein hoher Betriebsdruck am hydraulischen Antriebsmotor in einem geringeren Förderdruck der Einspeisepumpe umgesetzt werden, wobei eine entsprechende Erhöhung der Förderrate erreicht wird. Das Druckverhältnis ist dabei vorteilhafterweise größer als 3:1, weiterhin vorteilhafterweise größer als 5:1, weiterhin vorteilhafterweise größer als 10:1 und weiterhin vorteilhafterweise größer als 30:1. Wie bereits oben bezüglich des Hydrauliksystems beschrieben, ergeben sich so unterschiedliche Anwendungsmöglichkeiten für die Einspeisepumpe. Das Verhältnis wird dabei durch den Betriebsdruck für den hydraulischen Antriebsmotor und den von der Einspeisepumpe zu liefernden Förderdruck bestimmt. Je höher dabei der Betriebsdruck des hydraulischen Antriebsmotors ist, desto kleiner ist die benötigte Förderrate und damit die hydraulische Schleppleistung, insbesondere wenn der hydraulische Antriebsmotor wiederum über eine Hydraulikpumpe angetrieben wird.

Vorteilhafterweise wird die Einspeisepumpe dabei mit einem Förderdruck unter 70 bar betrieben, insbesondere mit einem Druck zwischen 0,1 und 50 bar. Ein typischer Druck zum Einspeisen von Hydraulikfluid ist dabei z. B. 5 bar für die Einspeisung an der Saugseite einer von der Einspeisepumpe mit Hydraulikfluid versorgten Hydraulikpumpe. Bei der Versorgung eines geschlossenen oder halboffenen Hydraulikkreislaufs liegen typische Drücke dagegen in einem Bereich von 35 bar. Der hydraulische Antriebsmotor wird wiederum vorteilhafterweise mit Betriebsdrücken von mehr als 150 bar betrieben, wobei ein typischer Betriebsdruck beispielsweise bei 250 bar liegen kann.

Vorteilhafterweise erfolgt das Verfahren dabei erfindungsgemäß so, wie dies bereits bezüglich des Hydrauliksystems dargestellt wurde. Insbesondere handelt es sich bei dem erfindungsgemäßen Verfahren dabei um ein Verfahren zum Betrieb eines Hydrauliksystems, wie es oben dargestellt wurde.

Die vorliegende Erfindung wird nun anhand von Ausführungsbeispielen sowie Zeichnungen näher dargestellt. Dabei zeigen:
- Figur 0:: ein Hydrauliksystem gemäß dem Stand der Technik,
- Figur 1:: ein erstes Ausführungsbeispiel der vorliegenden Erfindung, bei welchem die Einspeisepumpe zum Einspeisen von Hydraulikfluid in einen geschlossenen Hydraulikkreislauf eingesetzt wird,
- Figur 2:: ein zweites Ausführungsbeispiel der vorliegenden Erfindung, wobei die Einspeisepumpe zum Einspeisen von Hydraulikfluid in einen geschlossenen Hydraulikkreislauf und in einen halboffenen Hydraulikkreislauf eingesetzt wird,
- Figur 3:: ein drittes Ausführungsbeispiel der vorliegenden Erfindung, wobei eine erste erfindungsgemäße Einspeisepumpe zum Einspeisen von Hydraulikfluid in einen geschlossenen Hydraulikkreislauf eingesetzt wird, während eine zweite erfindungsgemäße Einspeisepumpe zur Versorgung einer Speicherpumpe eingesetzt wird, und
- Figur 4:: ein viertes Ausführungsbeispiel der vorliegenden Erfindung, wobei wiederum eine erste Einspeisepumpe gemäß der vorliegenden Erfindung Hydraulikfluid in einen geschlossenen Hydraulikkreislauf einspeist und eine zweite Einspeisepumpe gemäß der vorliegenden Erfindung eine Speicherpumpe mit Hydraulikfluid versorgt, wobei der hydraulische Antriebsmotor der zweiten Einspeisepumpe über die Speicherpumpe angetrieben wird.

Figur 1 zeigt ein erstes Ausführungsbeispiel eines erfindungsgemäßen Hydrauliksystems. Dabei ist ein erster Hydraulikkreislauf aus einer Hydraulikpumpe 1 und einem Hydraulikmotor 2 vorgesehen. Die Hydraulikpumpe 1 wird dabei von einem Verbrennungsmotor 3 angetrieben. Hierfür steht die Hydraulikpumpe 1 über ein Getriebe 7 sowie gegebenenfalls eine Kupplung mit dem Verbrennungsmotor 3 mechanisch in Verbindung. Alternativ zu dem Verbrennungsmotor könnte auch ein Elektromotor eingesetzt werden. Die Hydraulikpumpe 1 steht hydraulisch mit dem Hydraulikmotor 2 in Verbindung und treibt diesen an. Der Hydraulikmotor 2 treibt wiederum eine Vorrichtung 4 an, in diesem Fall eine Winde. Die Winde kann dabei insbesondere die Hubwinde eines Kranes sein. Alternativ kann es sich bei der Vorrichtung auch um eine Einziehwinde, ein Drehwerk oder einen Fahrantrieb handeln. Das Hydrauliksystem kann dabei z.B. in einer verfahrbaren Arbeitsmaschine, insbesondere einem Kran zum Einsatz kommen. Im Ausführungsbeispiel ist der erste Hydraulikkreislauf dabei als geschlossener Hydraulikkreislauf zwischen Hydraulikpumpe 1 und dem Hydraulikmotor 2 ausgeführt. Der Hydraulikmotor 2 ist als Rotationsmaschine ausgeführt und weist eine Abtriebsachse auf, welche durch Umwandlung der hydraulischen Energie in mechanische Energie im Hydraulikmotor 2 angetrieben wird. Im Ausführungsbeispiel sind dabei sowohl die Hydraulikpumpe 1 als auch der Hydraulikmotor 2 jeweils verstellbar als Verstellpumpe bzw. Verstellmotor ausgeführt.

Erfindungsgemäß ist eine Einspeisepumpe 20 vorgesehen, welche von einem hydraulischen Antriebsmotor 30 angetrieben wird. Die Einspeisepumpe 20 steht dabei über Rückschlagventile 6 mit beiden Hälften des ersten Hydraulikkreislaufs in Verbindung. Die Einspeisung erfolgt dabei zur Vermeidung von Kavitation im ersten Hydraulikkreislauf sowie zur Nachförderung von Hydraulikfluid, welches aufgrund von externen Leckagen aus dem Hydraulikkreislauf entweicht.

Der hydraulische Antriebsmotor 30 ist dabei im Ausführungsbeispiel als Konstantmotor ausgeführt. Ebenso ist die Einspeisepumpe 20 als Konstantpumpe ausgeführt. Dabei weist der hydraulische Antriebsmotor 30 ein kleineres Schluckvolumen auf als die Einspeisepumpe 20. Insbesondere ist dabei ein Verhältnis der Schluckvolumina von hydraulischem Antriebsmotor und Einspeisepumpe von ca. 1:7 vorgesehen. Die Einspeisepumpe 20 versorgt den ersten Hydraulikkreislauf damit mit Hydraulikfluid von z. B. 35 bar, während der hydraulische Antriebsmotor 30 mit einem Betriebsdruck von ca. 250 bar betrieben werden kann. Selbstverständlich sind für das System aus hydraulischem Antriebsmotor 30 und Einspeisepumpe 20 auch andere Verhältnisse der Schluckvolumina möglich, welche von dem optimalen Betriebsdruck für den hydraulischen Antriebsmotor 30 und dem von der Einspeisepumpe 20 geforderten Förderdruck abhängen. Dabei wird im Ausführungsbeispiel die Einspeisepumpe 20 ohne Zwischenschaltung eines mechanischen Getriebes von dem hydraulischen Antriebsmotor 30 angetrieben, so dass sich eine kompakte und verlustarme Einheit ergibt.

Der hydraulische Antriebsmotor 30 wird wiederum von einer zweiten Hydraulikpumpe 40 angetrieben. Die Hydraulikpumpe 40 wird ebenfalls von dem Verbrennungsmotor 3 angetrieben, wozu diese über das Getriebe 7 mit diesem in Verbindung steht. Durch die Verwendung des hydraulischen Antriebsmotors 30 mit geringem Schluckvolumen kann auch die zweite Hydraulikpumpe 40 entsprechend klein dimensioniert werden. Dabei weist die Hydraulikpumpe 40 vorteilhafterweise ein maximales Schluckvolumen auf, welches kleiner ist als das Schluckvolumen der Einspeisepumpe 20. Insbesondere weist die zweite Hydraulikpumpe 40 dabei ein maximales Schluckvolumen auf, welches mit dem Schluckvolumen der Einspeisepumpe 20 in etwa in dem Verhältnis steht, wie es bezüglich der Schluckvolumina des hydraulischen Antriebsmotors 30 und der Einspeisepumpe 20 angegeben wurde. Bei der Hydraulikpumpe 40 handelt es sich dabei um eine Verstellpumpe. Die Hydraulikpumpe 40 wird dabei über eine Druckregelung angesteuert.

Die erfindungsgemäße Anordnung hat den Vorteil, dass die Schleppleistung der klein dimensionierten zweiten Hydraulikpumpe 40 in Betriebsphasen, in denen nur wenig oder gar kein Hydrauliköl über die Einspeisepumpe 20 eingespeist wird, entsprechend geringer ist als bei einer größeren Hydraulikpumpe. Der Wirkungsgrad ist damit im Vergleich zur Standardeinspeisung über eine direkt über den Verbrennungsmotor angetriebene Einspeisepumpe zwar nicht in allen Betriebspunkten besser, die Betriebspunkte mit dem besseren Wirkungsgrad überwiegen zeitlich jedoch deutlich. Hierdurch ergibt sich ein verbesserter Gesamtwirkungsgrad der Anordnung. Zudem hat die vorliegende Erfindung den Vorteil, dass der am Verteilergetriebe benötigte Bauraum erheblich verringert werden kann, da hier nur eine kleinere Pumpe erforderlich ist. Gegebenenfalls sind auch weniger Abtriebe am Verteilergetriebe notwendig, da über die größere Fördermenge des erfindungsgemäßen Einspeisesystems auch mehrere Hydraulikkreisläufe versorgt werden können.

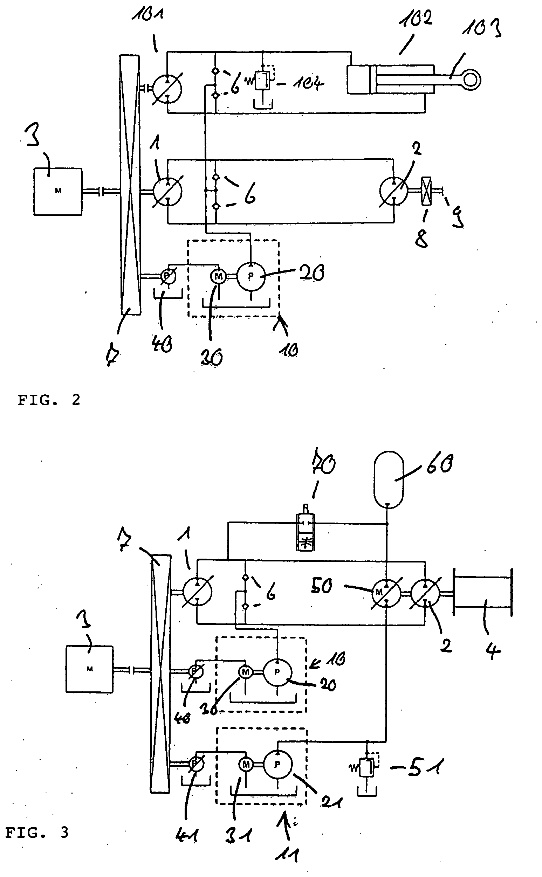

Eine solche Anordnung ist in Figur 2 gezeigt. Dabei ist die in Figur 1 gezeigte Anordnung mit einem ersten Hydraulikkreislauf mit Hydraulikpumpe 1 und Hydraulikmotor 2 und dem erfindungsgemäßen Einspeissystem um einen zweiten Hydraulickreislauf erweitert. Der zweite Hydraulikkreislauf weist eine zweite Hydraulikpumpe 101 sowie einen zweiten Hydraulikmotor 102 auf. Der zweite Hydraulikmotor 102 ist dabei ein Hydraulikzylinder, dessen beide Zylinderkammern jeweils mit den Ein- und Ausgängen der Hydraulikpumpe 101 in Verbindung stehen. Es handelt sich damit um einen halboffenen Hydraulikkreislauf, da die Differenzmenge zwischen den Volumina auf Kolben- und Ringfläche des Hydraulikzylinders 102 bei Bewegung des Hydraulikkolbens 103 über die Einspeisepumpe nachgefördert werden müssen. Dabei steht die Einspeisepumpe 20 des erfindungsgemäßen Einspeisesystems wiederum über Rückschlagventile 6 mit beiden Armen des halboffenen Hydraulikkreislaus in Verbindung. Weiterhin ist auf der Kolbenseite ein Ventil 104 vorgesehen, über welches Hydraulikfluid abfließen kann.

Erfindungsgemäß kann die Einspeisepumpe 20 damit zur Versorgung mehrerer Hydraulikkreisläufe eingesetzt werden. Der in Figur 2 gezeigte Hydraulikkreislauf kann beispielsweise in einem Kran eingesetzt werden, wobei der Hydraulikzylinder 102 z. B. als Wippzylinder eines Auslegers eingesetzt wird und der Hydraulikmotor 2 zum Antrieb einer Winde. Der Antrieb der Winde kann dabei, wie in Figur 2 ebenfalls angedeutet, noch über ein mechanisches Getriebe 8 sowie eine Kupplung 9 erfolgen.

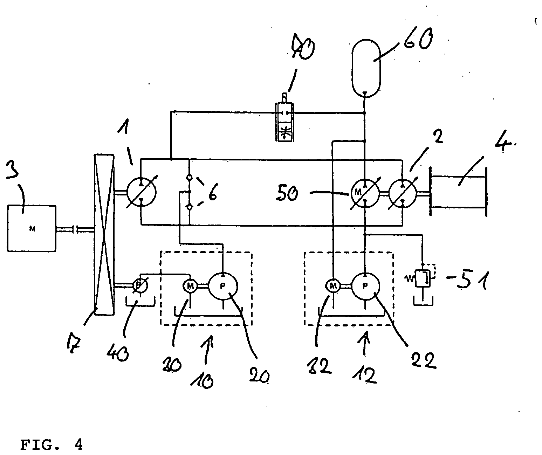

In Figuren 3 und 4 sind zwei weitere Ausführungsbeispiele der vorliegenden Erfindung gezeigt, bei welchen jeweils eine dritte Verdrängermaschine 50 vorgesehen ist, über welche ein Hydraulikhochdruckspeicher 60 aufladbar ist. Die erfindungsgemäße Anordnung aus Einspeisepumpe und hydraulischem Antriebsmotor wird in den Ausführungsbespielen in Figur 3 und 4 nun dazu eingesetzt, um die als Speicherpumpe arbeitende dritte Verdrängermaschine 50 auf ihrer Saugseite mit Hydraulikfluid mit einem gewissen Maximaldruck zu versorgen. Hierdurch kann die Förderrate der dritten Verdrängermaschine 50 erheblich erhöht werden. Insbesondere kann diese mit höheren Drehzahlen betrieben werden als dies ohne eine Einspeisepumpe möglich wäre.

Die dritte hydraulische Verdrängermaschine 50 wird dabei in Figuren 3 und 4 dazu eingesetzt, um Energie aus einer Vorrichtung 4 zurückzugewinnen bzw. um deren Antrieb zu unterstützen. Dabei ist ein erster Hydraulikkreislauf aus der Hydraulikpumpe 1 und dem Hydraulikmotor 2 vorgesehen, über welchen die Vorrichtung 4, in diesem Fall eine Hubwinde eines Krans, angetrieben werden kann. Wie bereits im ersten Ausführungsbeispiel gezeigt, wird die Hydraulikpumpe 1 dabei über einen Verbrennungsmotor angetrieben. Die dritte hydraulische Verdrängermaschine steht dabei mit der Antriebswelle der Vorrichtung 4 in Verbindung, so dass z. B. beim Senken der Last die dritte hydraulische Verdrängermaschine 50 als Hydraulikpumpe arbeitet, welche von der Vorrichtung 4 angetrieben wird und Hydraulikfluid in den Hochdruckspeicher 60 fördert. Umgekehrt kann beim Heben der Last der Hydraulikmotor 2 über die dritte hydraulische Verdrängermaschine 50 unterstützt werden, welche dabei als Hydraulikmotor arbeitet und durch das Hydraulikfluid im Hochdruckspeicher 60 angetrieben wird. Weiterhin ist in den beiden Ausführungsbeispielen ein Ventil 70 vorgesehen, über welches der Hochdruckspeicher 60 mit der Hydraulikpumpe 1 verbindbar ist, um den Hydraulikspeicher aufladen zu können.

Erfindungsgemäß wird die dritte Verdrängermaschine 50 von der Einspeisepumpe 21 bzw. 22 mit Hydraulikfluid versorgt. Dabei sind jeweils erfindungsgemäße Einspeisesysteme 11 bzw. 12 vorgesehen, in welchen die Einspeisepumpe 21 bzw. 22 von einem hydraulischen Antriebsmotor 31 bzw. 32 angetrieben wird. Da die Einspeisepumpe 21 bzw. 22 die dritte hydraulische Verdrängermaschine 50 mit großen Hydraulikfluidvolumina mit einem entsprechenden Versorgungsdruck versorgen soll, ist das Verhältnis zwischen den Schluckvolumina der hydraulischen Antriebsmotoren 31 bzw. 32 und dem der Einspeisepumpen 21 bzw. 22 entsprechend angepaßt. Ein typisches Verhältnis wäre hier beispielsweise 1:50, so dass sich bei einem Förderdruck der Einspeisepumpe 21 bzw. 22 von ca. 5 bar ein Betriebsdruck von ca. 250 bar für die hydraulischen Antriebsmotoren 31 und 32 ergibt. Die hydraulischen Antriebsmotoren und hydraulischen Einspeisepumpen sind dabei jeweils wieder als Konstantpumpen ausgeführt. Dabei stehen die hydraulischen Antriebsmotoren und die hydraulischen Einspeisepumpen jeweils ohne zwischengeschaltetes mechanisches Getriebe miteinander in Verbindung.

In den beiden Ausführungsbeispielen ist eine weitere Einspeisepumpe 20 gemäß der vorliegenden Erfindung vorgesehen, um den ersten Hydraulikkreislauf mit Hydraulikfluid zu versorgen. Das erfindungsgemäße Einspeisesystem 10 ist dabei genau so aufgebaut, wie dies bereits bezüglich des ersten Ausführungsbeispiels in Figur 1 dargestellt wurde. Insbesondere ist dabei ein hydraulischer Antriebsmotor 30 zum Antrieb der Einspeisepumpe 20 vorgesehen, wobei der hydraulische Antriebsmotor 30 wiederum über eine zweite Hydraulikpumpe 40 angetrieben wird. Die zweite Hydraulikpumpe 40 wird wiederum von dem Verbrennungsmotor 3 angetrieben.

Der Antrieb der Einspeisepumpen 21 und 22 zur Versorgung der dritten hydraulischen Verdrängermaschine 50 ist dagegen in den in Figuren 3 und 4 gezeigten Ausführungsbeispielen unterschiedlich gelöst.

Bei dem in Figur 3 gezeigten dritten Ausführungsbeispiel wird der hydraulische Antriebsmotor 31 zum Antrieb der Einspeisepumpe 21 von einer separaten zweiten Hydraulikpumpe 41 angetrieben, welche allein dem Antrieb des hydraulischen Antriebsmotors 31 dient. Diese Hydraulikpumpe 41 ist dabei wiederum als Verstellpumpe mit einer Druckregelung ausgeführt. Die Hydraulikpumpe 41 wird dabei ebenfalls vom Verbrennungsmotor 3 angetrieben, wozu das Verteilergetriebe 7 entsprechend ausgestattet ist. Der Antrieb des Einspeisesystems für die dritte hydraulische Verdrängermaschine ist damit im wesentlichen so aufgebaut, wie dies für die Einspeisesysteme im ersten und zweiten Ausführungsbeispiel bereits dargestellt wurde. Insbesondere weist dabei die zweite Hydraulikpumpe 41 ein kleineres maximales Schluckvolumen auf als die Einspeisepumpe 21, so dass entsprechend Bauraum am Verteilergetriebe gespart werden kann und sich die Schleppleistung reduzieren lässt.

In Figur 4 ist nun eine Alternative zu der in Figur 3 gezeigten Antriebsversion für die Einspeisepumpe der dritten hydraulischen Verdrängermaschine 50 gezeigt. Dabei steht der Eingang des hydraulischen Antriebsmotors 32 mit dem Hochdruckspeicher 60 sowie dem speicherseitigen Ausgang der dritten hydraulischen Verdrängermaschine 50 in direkter Verbindung. Der Ausgang der Einspeisepumpe 22 steht dagegen mit dem Eingang der dritten hydraulischen Verdrängermaschine in Verbindung, welcher im Speicherbetrieb die Saugseite bildet. Das Druckverhältnis auf der Saugseite und auf der Speicherseite der dritten hydraulischen Verdrängermaschine 50 wird dabei durch das Schluckvolumenverhältnis zwischen dem hydraulischen Antriebsmotor 32 und der Einspeisepumpe 22 eingestellt. Befindet sich die dritte hydraulische Verdrängermaschine 50 in Ruhestellung, so befinden sich auch Antriebsmotor 32 und Einspeisepumpe 22 in Ruhestellung in einem statischen Gleichgewicht, so dass keine Schleppleistung und auch keine Energieverluste auftreten. Im Pumpbetrieb der dritten hydraulischen Verdrängermaschine 50 wird nun ein Teil des mit hohem Druck in den Hydraulikspeicher 60 geförderten Hydraulikfluids dazu verwendet, um den hydraulischen Antriebsmotor 32 und damit die Einspeisepumpe 22 anzutreiben.

In beiden Ausführungsbeispielen ist dabei vorgesehen, dass dann, wenn die dritte hydraulische Verdrängermaschine 50 im Motorbetrieb arbeitet, das Hydraulikfluid über ein Überdruckventil 51 abfließen kann.

Die vorliegende Erfindung stellt dabei ein Einspeisesystem zur Verfügung, durch welches sich das Hydrauliksystem flexibler auslegen lässt. Insbesondere können dabei die Schleppleistung verringert oder Bauraum am Verteilergetriebe eingespart werden.

## Patentansprüche

1. Hydrauliksystem mit einer Einspeisepumpe (20, 21, 22) zum Einspeisen von Hydraulikfluid auf der Saugseite einer Hydraulikpumpe (2, 50) und einem hydraulischen Antriebsmotor (30, 31, 32) zum Antreiben der Einspeisepumpe (20, 21, 22), sowie mit einer zweiten als Verstellpumpe ausgeführten Hydraulikpumpe (40, 41), über welche der hydraulische Antriebsmotor antreibbar ist, wobei der hydraulische Antriebsmotor mit einem größeren Druck und einer entsprechend kleineren Förderrate betreibbar ist als die Einspeisepumpe (20, 21, 22), **dadurch gekennzeichnet, dass** die zweite Hydraulikpumpe dabei druckgeregelt ist.

2. Hydrauliksystem nach Anspruch 1, wobei das Druckverhältnis größer als 3:1, vorteilhafterweise größer als 5:1, weiterhin vorteilhafterweise größer als 10:1, weiterhin vorteilhafterweise größer als 30:1 ist.

3. Hydrauliksystem nach Anspruch 1 oder 2, wobei die Einspeisepumpe (20, 21, 22) als Konstantpumpe ausgeführt ist.

4. Hydrauliksystem nach einem der vorangegangenen Ansprüche, wobei vorteilhafterweise die zweite Hydraulikpumpe (40, 41) als Verstellpumpe ausgeführt ist.

5. Hydrauliksystem nach Anspruch 4, wobei die zweite Hydraulikpumpe (50) von der Einspeisepumpe (22) mit Hydraulikfluid versorgt wird.

6. Hydrauliksystem nach Anspruch 4, wobei eine separate zweite Hydraulikpumpe (40, 41) zum Antrieb des hydraulischen Antriebsmotors (30, 31) vorgesehen ist.

7. Hydrauliksystem nach einem der Ansprüche 4 bis 6, wobei die zweite Hydraulikpumpe (40, 41) von einem Verbrennungsmotor (3) oder einem Elektromotor angetrieben wird, wobei vorteilhafterweise der Verbrennungsmotor oder der Elektromotor dem Antrieb einer oder mehrerer weiterer Hydraulikpumpen (1, 101) dient.

8. Hydrauliksystem nach einem der vorangegangenen Ansprüche, mit einem Hochdruckspeicher (60), welcher mit dem hydraulischen Antriebsmotor (32) verbunden oder verbindbar ist.

9. Hydrauliksystem nach einem der vorangegangenen Ansprüche, wobei die Einspeisepumpe (20, 21, 22) Hydraulikfluid in einen oder mehrere Hydraulickreisläufe aus Hydraulikpumpe (1, 101) und Hydraulikmotor (2) einspeist, insbesondere über ein oder mehrere Rückschlagventile.

10. Hydrauliksystem nach einem der vorangegangenen Ansprüche, wobei die Einspeisepumpe (22) eine dritte hydraulische Verdrängermaschine (50) mit Hydraulikfluid versorgt, über welche ein Hochdruckspeicher (60) aufladbar ist, wobei vorteilhafterweise die dritte hydraulische Verdrängermaschine (50) mit einer hydraulisch angetriebenen Vorrichtung (4) mechanisch verbunden oder verbindbar ist, deren Energie durch das Aufladen des Hydraulikspeichers (60) rückgewonnen werden kann.

11. Hydrauliksystem nach einem der vorangegangenen Ansprüche, wobei der Einlass des hydraulischen Antriebsmotors (32) mit dem Auslass einer dritten Verdrängermaschine (50) verbunden oder verbindbar ist, während der Einlass der dritten Verdrängermaschine (50) mit dem Auslass der Einspeisepumpe (22) verbunden oder verbindbar ist, wobei der Einlass des hydraulischen Antriebsmotors (32) weiterhin vorteilhafterweise mit einem Hochdruckspeicher (60) in Verbindung steht.

12. Verfahren zum Einspeisen von Hydraulikfluid auf der Saugseite einer Hydraulikpumpe eines Hydrauliksystems über eine Einspeisepumpe (20, 21, 22), wobei die Einspeisepumpe (20, 21, 22) von einem hydraulischen Antriebsmotor (30, 31, 32) angetrieben wird, der über eine zweite als Verstellpumpe ausgeführte Hydraulikpumpe (40, 41) antreibbar ist, wobei der hydraulische Antriebsmotor mit einem größeren Druck und einer entsprechend kleineren Förderrate betrieben wird als die Einspeisepumpe, **dadurch gekennzeichnet, dass** die zweite Hydraulikpumpe dabei druckgeregelt ist.

13. Verfahren nach Anspruch 12, , wobei das Druckverhältnis vorteilhafterweise größer als 3:1, weiterhin vorteilhafterweise größer als 5:1, weiterhin vorteilhafterweise größer als 10:1, weiterhin vorteilhafterweise größer als 30:1 ist.

14. Verfahren nach Anspruch 12 oder 13, wobei die Einspeisepumpe (20, 21, 22) Hydraulikfluid mit einem Druck unter 70 bar einspeist, insbesondere mit einem Druck zwischen 0,1 und 50 bar.

15. Verfahren nach einem der Ansprüche 12 bis 14 zum Betrieb eines Hydrauliksystems nach einem der Ansprüche 1 bis 11.

## Claims

1. A hydraulic system with a feed pump (20, 21, 22) for feeding hydraulic fluid on the suction side of a hydraulic pump (2, 50) and a hydraulic drive motor (30, 31, 32) for driving the feed pump (20, 21, 22), and with a second hydraulic pump (40, 41) configured as a variable displacement pump via which the hydraulic drive motor can be driven, wherein the hydraulic drive motor can be operated with a greater pressure and a correspondingly smaller delivery rate than the feed pump (20, 21, 22), **characterized in that** the second hydraulic pump is pressure-regulated.

2. The hydraulic system according to claim 1, wherein the pressure ratio is greater than 3:1, advantageously greater than 5:1, furthermore advantageously greater than 10:1, furthermore advantageously greater than 30:1.

3. The hydraulic system according to claim 1 or 2, wherein the feed pump (20, 21, 22) is configured as a fixed displacement pump.

4. The hydraulic system according to any of the preceding claims, wherein the second hydraulic pump (40, 41) advantageously is configured as a variable displacement pump.

5. The hydraulic system according to claim 4, wherein the second hydraulic pump (50) is supplied with hydraulic fluid by the feed pump (22).

6. The hydraulic system according to claim 4, wherein a separate second hydraulic pump (40, 41) is provided for driving the hydraulic drive motor (30, 31).

7. The hydraulic system according to any of claims 4 to 6, wherein the second hydraulic pump (40, 41) is driven by an internal combustion engine (3) or an electric motor, wherein advantageously the internal combustion engine or the electric motor serves to drive one or more further hydraulic pumps (1, 101).

8. The hydraulic system according to any of the preceding claims, comprising a high-pressure accumulator (60) that is connected or connectable to the hydraulic drive motor (32).

9. The hydraulic system according to any of the preceding claims, wherein the feed pump (20, 21, 22) feeds hydraulic fluid into one or more hydraulic circuits comprising hydraulic pump (1, 101) and hydraulic motor (2), in particular via one or more check valves.

10. The hydraulic system according to any of the preceding claims, wherein the feed pump (22) supplies a third hydraulic displacement machine (50) with hydraulic fluid, by means of which a high-pressure accumulator (60) can be charged, wherein advantageously the third hydraulic displacement machine (50) is mechanically connected or connectable to a hydraulically driven apparatus (4) whose energy can be recovered by charging the hydraulic accumulator (60).

11. The hydraulic system according to any of the preceding claims, wherein the inlet of the hydraulic drive motor (32) is connected or connectable to the outlet of a third displacement machine (50), while the inlet of the third displacement machine (50) is connected or connectable to the outlet of the feed pump (22), wherein the inlet of the hydraulic drive motor (32) furthermore advantageously is connected to a high-pressure accumulator (60).

12. A method for feeding hydraulic fluid on the suction side of a hydraulic pump of a hydraulic system via a feed pump (20, 21, 22), wherein the feed pump (20, 21, 22) is driven by a hydraulic drive motor (30, 31, 32) that can be driven via a second hydraulic pump (40, 41) configured as a variable displacement pump, wherein the hydraulic drive motor is operated with a greater pressure and a correspondingly smaller delivery rate than the feed pump, **characterized in that** the second hydraulic pump is pressure-regulated.

13. The method according to claim 12, wherein the pressure ratio advantageously is greater than 3:1, furthermore advantageously greater than 5:1, furthermore advantageously greater than 10:1, furthermore advantageously greater than 30:1.

14. The method according to claim 12 or 13, wherein the feed pump (20, 21, 22) feeds in hydraulic fluid with a pressure below 70 bar, in particular with a pressure between 0.1 and 50 bar.

15. The method according to any of claims 12 to 14 for operating a hydraulic system according to any of claims 1 to 11.

## Revendications

1. Système hydraulique comportant une pompe d'alimentation (20, 21, 22) pour introduire du fluide hydraulique sur le côté d'aspiration d'une pompe hydraulique (2, 50) et un moteur hydraulique d'entraînement (30, 31, 32) pour entraîner la pompe d'alimentation (20, 21, 22), et une deuxième pompe hydraulique (40, 41) configuré comme pompe à cylindrée variable, par laquelle le moteur hydraulique d'entraînement peut être entraîné, dans lequel le moteur hydraulique d'entraînement peut fonctionner avec une pression supérieure et un débit inférieure en proportion comparé à la pompe d'alimentation (20, 21, 22), **caractérisé en ce que** la deuxième pompe hydraulique est réglée en pression.

2. Système hydraulique selon la revendication 1, dans lequel le rapport de pression est supérieur à 3 : 1, avantageusement supérieur à 5 : 1, en outre avantageusement supérieur à 10 : 1, en outre avantageusement supérieur à 30 : 1.

3. Système hydraulique selon la revendication 1 ou 2, dans lequel la pompe d'alimentation (20, 21, 22) est configurée comme pompe à cylindrée constant.

4. Système hydraulique selon l'une quelconque des revendications précédentes, dans lequel avantageusement la deuxième pompe hydraulique (40, 41) est configurée comme pompe à cylindrée variable.

5. Système hydraulique selon la revendication 4, dans lequel la deuxième pompe hydraulique (50) est alimentée en fluide hydraulique par la pompe d'alimentation (22).

6. Système hydraulique selon la revendication 4, dans lequel une deuxième pompe hydraulique séparée (40, 41) est prévue pour l'entraînement du moteur hydraulique d'entraînement (30, 31).

7. Système hydraulique selon l'une quelconque des revendications 4 à 6, dans lequel la deuxième pompe hydraulique (40, 41) est entraînée par un moteur à combustion interne ou un moteur électrique, le moteur à combustion interne ou le moteur électrique avantageusement servant à l'entraînement d'une ou plusieurs pompes hydrauliques supplémentaires (1, 101).

8. Système hydraulique selon l'une quelconque des revendications précédentes, comportant un accumulateur haute pression (60), qui est relié ou peut être relié au moteur hydraulique d'entraînement (32).

9. Système hydraulique selon l'une quelconque des revendications précédentes, dans lequel la pompe d'alimentation (20, 21, 22) introduit du fluide hydraulique dans un ou plusieurs circuits hydrauliques comprenant une pompe hydraulique (1, 101) et un moteur hydraulique (2), en particulier à travers un ou plusieurs clapets anti-retour.

10. Système hydraulique selon l'une quelconque des revendications précédentes, dans lequel la pompe d'alimentation (22) alimente une troisième machine hydraulique à déplacement (50) en fluide hydraulique, par laquelle un accumulateur haute pression (60) peut être chargé, la troisième machine hydraulique à déplacement (50) avantageusement étant reliée ou pouvant être reliée mécaniquement à un appareil (4) entraîné hydrauliquement, dont l'énergie peut être récupérée en chargeant l'accumulateur hydraulique (60).

11. Système hydraulique selon l'une quelconque des revendications précédentes, dans lequel l'entrée du moteur hydraulique d'entraînement (32) est reliée ou peut être reliée à la sortie d'une troisième machine à déplacement (50), tandis que l'entrée de la troisième machine à déplacement (50) est reliée ou peut être reliée à la sortie de la pompe d'alimentation (22), l'entrée du moteur hydraulique d'entraînement (32) en outre avantageusement étant relié à un accumulateur haute pression (60).

12. Procédé pour introduire du fluide hydraulique sur le côté d'aspiration d'une pompe hydraulique d'un système hydraulique par une pompe d'alimentation (20, 21, 22), dans lequel la pompe d'alimentation (20, 21, 22) est entraînée par un moteur hydraulique d'entraînement (30, 31, 32), qui peut être entraîné par une deuxième pompe hydraulique (40, 41) configurée comme pompe à cylindrée variable, le moteur hydraulique d'entraînement fonctionnant avec une pression supérieure et un débit inférieure en proportion comparé à la pompe d'alimentation, **caractérisé en ce que** la deuxième pompe hydraulique est réglée en pression.

13. Procédé selon la revendication 12, dans lequel le rapport de pression avantageusement est supérieur à 3 : 1, en outre avantageusement supérieur à 5 : 1, en outre avantageusement supérieur à 10 : 1, en outre avantageusement supérieur à 30 : 1.

14. Procédé selon la revendication 12 ou 13, dans lequel la pompe d'alimentation (20, 21, 22) introduit du fluide hydraulique à une pression au-dessous de 70 bar, en particulier à une pression entre 0,1 et 50 bar.

15. Procédé selon l'une quelconque des revendications 12 à 14 pour faire fonctionner un système hydraulique selon l'une quelconque des revendications 1 à 11.
